# EUROPÄISCHE PATENTSCHRIFT

(11) **EP 1 836 022 B1**
(45) Veröffentlichungstag und Bekanntmachung des Hinweises auf die Patenterteilung: **10.06.2015**
(21) Anmeldenummer: 06705794.3
(22) Anmeldetag: 12.01.2006
(51) Int. Cl.: B23K 26/08

(54) **VERFAHREN ZUR BEARBEITUNG VON WERKSTÜCKEN MITTELS LASERSTRAHLUNG**
METHOD FOR MACHINING WORKPIECES BY USING LASER RADIATION
PROCEDE D'USINAGE DE PIECES PAR RAYONNEMENT LASER

(30) Priorität: 14.01.2005 DE 102005002670
(43) Veröffentlichungstag der Anmeldung: 26.09.2007
(73) Patentinhaber: Fraunhofer-Gesellschaft zur Förderung der angewandten Forschung e.V., 80686 München (DE)
(72) Erfinder: KLOTZBACH, Annett, 01277 Dresden (DE); FLEISCHER, Veiko, 01279 Dresden (DE); MORGENTHAL, Lothar, 01187 Dresden (DE)
(74) Vertreter: Pfenning, Meinig & Partner GbR
(86) Internationale Anmeldenummer: PCT/DE2006/000055
(87) Internationale Veröffentlichungsnummer: WO 2006/074651

(56) Entgegenhaltungen:
- EP-A- 1 336 466
- EP-A2- 0 661 867
- DE-C1- 19 537 467
- US-A- 3 761 675

## Beschreibung

Die Erfindung betrifft ein Verfahren zur Bearbeitung von Werkstücken mittels Laserstrahlung, wobei die zu bearbeitenden Werkstücke bei der Bearbeitung bewegt werden und mindestens ein Laserstrahl in Bezug zu zwei orthogonal zueinander ausgerichteten Achsen ausgelenkt wird. Mit der Erfindung können hohe Bearbeitungsgeschwindigkeiten und eine entsprechende Bearbeitungspräzision erreicht werden, ohne dass die Kosten für die erforderliche Anlagentechnik gegenüber herkömmlichen Lösungen erhöht sind. Dabei ist auch eine automatisierte Bewegungskonturprogrammierung möglich.

Es können unterschiedlichste Konturen bearbeitet werden, die am Werkstück auch in Form unregelmäßiger bzw. nicht wieder kehrender Muster ausgebildet werden sollen. Die Bearbeitungskonturen können dabei sehr groß dimensioniert und deutlich größer, als ein Arbeitsfeld eines Laserstrahles, der mittels Scannerspiegeln zweidimensional ausgelenkt werden kann, sein.

Mit dem Verfahren können unterschiedliche Bearbeitungsarten, wie z.B. Schneid-, Abtragungsvorgänge, Strukturierungen, lokale Werkstoffveränderungen (Härten) und Schweißverbindungen durchgeführt werden.

Eine Lösung für die Erzeugung wiederkehrender Muster in kontinuierlich bewegtem Flachmaterial ist in DE 195 37 467 C1 beschrieben. Dabei sollen auf dem oder am Flachmaterial Knick- bzw. Falzkanten, an Stelle von aufgedruckten Markierungen, ausgebildet werden, die mit der Bandgeschwindigkeit des Flachmaterials für die Ansteuerung eines Laserscansystems detektiert werden können.

Solche Markierungen sind aber nachteilig, da sie zusätzlich ausgebildet werden müssen, was die Kosten für die Anlagentechnik (Prägewerkzeuge und Detektoren) erhöht. Knick-- oder Falzkanten beeinträchtigen aber auch Bereiche des Flachmaterials, als Werkstück, die ggf. zu erhöhtem Verschnitt führen. Die Bearbeitungsgeschwindigkeit kann nicht ohne weiteres in Richtung kurzer Bearbeitungszeiten optimiert werden.

Außerdem ist eine Synchronisation von Prägewerkzeugen, Vorschubgeschwindigkeit und Steuerung für das Laserscannsystem erforderlich.

In US 3,761,675 ist eine Vorrichtung zum Schneiden von Flachmaterial beschrieben, bei der das Schneiden mit Laserstrahl innerhalb bestimmter Zonen durchgeführt werden soll, die in Querstreifen unterteilt sind.

Aus der EP 0 661 867 A2 ist eine Laserabtastmarkierungsvorrichtung bekannt, die die Oberfläche eines Objekts abtastet und in einem vorbestimmten Bereich gefördert wird. Mit dem Laserstrahl sollen Markierungen ausgebildet werden. Es ist ein Bereichsspeicherabschnitt zum Speichern von Koordinaten eines Bestrahlungspunktes in dem vorbestimmten Bereich, ein Endpunktkoordinatenspeicherabschnitt zum Speichern von Koordinaten eines Bestrahlungsendpunktes im vorbestimmten Bereich, einen Markierungsreferenzpunktabschnitt zum Koordinaten eines Referenzpunktes auf der Markierung und eine Geschwindigkeitseinstelleinrichtung zum Einstellen von Abtastgeschwindigkeiten vorhanden.

Es ist daher Aufgabe der Erfindung ein Verfahren zur Bearbeitung bewegter Werkstücke mittels Laserstrahlung zur Verfügung zu stellen, mit dem großformatige Bearbeitungskonturen, bei möglichst großer Bearbeitungsgeschwindigkeit und hoher Präzision ausgebildet werden können.

Erfindungsgemäß wird diese Aufgabe mit einem Verfahren gemäß Anspruch 1 gelöst. Vorteilhafte Ausgestaltungen und Weiterbildungen der Erfindung können mit den in den untergeordneten Ansprüchen bezeichneten Merkmalen erreicht werden.

Das erfindungsgemäße Verfahren kann mit an sich herkömmlicher Anlagentechnik betrieben werden. Dabei kann ein Laserstrahl mittels Scannerspiegeln so ausgelenkt werden, dass eine Bearbeitung von Werkstücken innerhalb eines Arbeitsfeldes möglich ist. Die Arbeitsfelder haben in der Regel eine zumindest annähernd rechteckige bzw. quadratische Gestalt. In der Regel sind auch weitere Elemente für eine Strahlformung und Veränderung der Fokuslage eines Laserstrahles in dessen Strahlengang angeordnet.

Die Scannerspiegel sowie andere Elemente zur Beeinflussung des Laserstrahles, auch seiner Leistung, sind in der Regel an eine elektronische Steuerung angeschlossen. Dabei werden häufig auch Meßsignale einer solchen elektronischen Steuerung zugeführt, die in ihr ausgewertet und bei der Steuerung des. Prozesses berücksichtigt werden können.

Es liegt auf der Hand, dass ein Arbeitsfeld eine endliche Flächengröße aufweist und so großformatige Werkstücke nicht ohne zumindest eine Relativbewegung von Arbeitsfeld und Werkstück bearbeitet werden können. Bei sehr großen Werkstücken bzw. auch großen Vorschubgeschwindigkeiten wird üblicherweise lediglich das Werkstück bewegt. Dies trifft insbesondere auf lange bandförmige Werkstücke zu die unterhalb des fest stehenden Arbeitsfeldes hindurch bewegt werden.

Bisher war es üblich, z. B. beim Laserstrahlschneiden von rechteckigen geometrischen Konturen aus kontinuierlich bewegten bandförmigen Werkstücken zwei Laserstrahlen einzusetzen, mit denen die beiden Seitenkanten gleichzeitig geschnitten worden sind.

Im Gegensatz dazu erfolgt gemäß der Erfindung eine Auslenkung des Brennfleckes so, dass eine Seite einer solchen rechteckigen Kontur innerhalb eines Bearbeitungssegmentes bis zu einer Grenze des Bearbeitungssegmentes durchgeführt wird. Nach Erreichen dieser Grenze erfolgt ein Sprung, bei dem keine Bearbeitung durchgeführt wird, bis zur gegenüberliegenden auszuschneidenden Seitenkante der rechteckigen Kontur. Bei Erreichen dieser Position erfolgt dann wiederum eine Bearbeitung mit gleichzeitiger Auslenkung des Brennfleckes in entgegengesetzter Richtung bis hin zur gegenüberliegenden Grenze dieses Bearbeitungssegmentes.

Dadurch erfolgt innerhalb der zur Verfügung stehenden von der Vorschubgeschwindigkeit beeinflussten Bearbeitungszeit eine vollständige Bearbeitung innerhalb des jeweiligen Bearbeitungssegmentes. Die Totzeiten, bei Sprüngen bei denen eine nicht nutzbare Auslenkung zur Neupositionierung des Brennfleckes erfolgt, können so minimiert und sowohl die Bearbeitungszeit, wie auch die Positionierung für eine Weiterbearbeitung innerhalb des jeweiligen Bearbeitungssegmentes optimiert werden.

Mit der Erfindung kann auch eine Bearbeitung von plattenförmigen Elementen erfolgen, wenn diese z.B. um eine Drehachse rotieren und so vom Arbeitsfeld eines Laserstrahles der gesamte oder ein großer Flächenbereich eines sich drehenden Werkstückes überstrichen werden kann. So kann beispielsweise ein kreisförmiges Werkstück bearbeitet werden.

Es können nicht nur Werkstücke mit planarer ebener Oberfläche, sondern auch leicht gekrümmte oder mit einer Oberflächenkontur versehene Werkstücke bearbeitet werden.

Gemäß der Erfindung werden Positionskoordinaten der jeweiligen Bearbeitungskontur einer elektronischen Auswerte- und Steuereinheit, die die Steuerung der der Scannerspiegel und ggf. auch der Laserleistung realisiert, zugeführt. Positionskoordinaten der Bearbeitungskontur werden dann virtuellen Bearbeitungssegmenten zugeordnet.

Dabei wird der Abstand der Grenzen von Bearbeitungssegmenten so gewählt, dass er maximal der Hälfte der Länge des Arbeitsfeldes in Vorschubrichtung des Werkstücks beträgt. Die Abstände der Grenzen sollten möglichst groß gewählt werden, um die Anzahl der Bearbeitungssprünge bei der Bearbeitung innerhalb von Bearbeitungssegmenten klein halten zu können und die für die Positionierung bzw. Aussteuerung des Brennfleckes erforderliche Zeit, insbesondere Totzeiten zu reduzieren.

Die Bearbeitung des sich bewegenden Werkstückes erfolgt dann sequentiell innerhalb von Bearbeitungssegmenten. Dementsprechend wird die Bearbeitungskontur innerhalb eines Bearbeitungssegmentes durch Auslenkung des Laserstrahles abgefahren. Ist die Bearbeitung dieses Bearbeitungssegmentes abgeschlossen und das Werkstück mit entsprechendem Vorschub weiter bewegt worden, beginnt die Bearbeitung des in Vorschubrichtung unmittelbar nachfolgenden Bearbeitungssegmentes usw. Verringert sich die nominelle Vorschubgeschwindigkeit, so ändert sich die Strahlauslenkung, jedoch nicht die eigentliche Bearbeitungsgeschwindigkeit (z.B. Schnittgeschwindigkeit) des Brennfleckes auf dem Werkstück. Der Prozess ruht, bis die nächste Segmentgrenze überschritten ist dadurch werden konstante Bearbeitungsergebnisse unabhängig von der Vorschubgeschwindigkeit gewährleistet.

Die Bearbeitungssegmente können so vorgegeben sein, dass ihre jeweiligen Grenzen gleiche Abstände zueinander aufweisen, so dass zwischen den Grenzen ein jeweils gleicher maximaler Arbeitsweg zurück gelegt werden kann. Dies ist zumindest in Bereichen von Vorschubgeschwindigkeiten des Werkstückes möglich. Bei erheblichen Abweichungen von Vorschubgeschwindigkeiten, kann auch ein veränderter Abstand von Grenzen der Bearbeitungssegmente gewählt und eine entsprechende Anpassung vorgenommen werden. Dies kann ohne Weiteres mittels der elektronischen Auswerte- und Steuereinheit realisiert werden, wenn eine Veränderung der Vorschubgeschwindigkeit des Werkstückes eingeleitet oder detektiert worden ist.

Wird der maximale Abstand von Grenzen für Bearbeitungssegmente bei 50 % oder kleiner als 50% der jeweiligen Länge/Ausdehnung des Arbeitsfeldes, das vom Laserstrahl bearbeitet werden kann, gehalten, kann eine sichere hoch präzise Bearbeitung unter Berücksichtigung der jeweiligen Bearbeitungskontur innerhalb des Bearbeitungssegmentes mit Sicherheit erfolgen. Dabei sind die Bearbeitungskonturen in Bearbeitungssegmenten in der Regel verschieden und regelmäßige Wiederholungen von Bearbeitungskonturen müssen sich nicht nach der Begrenzung der Bearbeitungssegmente richten. Die Bearbeitungsprogramme können analytisch, z.B. durch eine automatische Programmgenerierung, ermittelt werden.

Bei der Bearbeitung innerhalb eines Bearbeitungssegmentes kann eine Auslenkung des Laserstrahles mit seinem Brennfleck in unterschiedliche, auch wechselnde Richtungen, bis hin zu einer Auslenkung/Bewegung entgegen der Vorschubrichtung des Werkstückes erfolgen.

Günstig ist es aber auch die jeweilige Vorschubgeschwindigkeit oder den Vorschubweg bzw. beides in Kombination miteinander zu detektieren und bei der Steuerung der Laserstrahlauslenkung bzw. Brennfleckbewegung zu berücksichtigen, um die Positionsgenauigkeit der Bearbeitungskontur zu erhöhen.

Es kann auch eine Regelung oder Steuerung der Laserleistung durchgeführt werden, um beispielsweise unterschiedliche Bearbeitungen durchführen zu können oder Werkstückbereiche durch Reduzierung der Laserleistung geringer oder nicht zu bearbeiten. Letzteres kann durch temporäres Ausschalten der Laserlichtquelle oder eine erhebliche Reduzierung der Leistung erreicht werden.

So kann innerhalb von Bearbeitungssegmenten ein Schneidvorgang und an anderen Stellen für die Ausbildung einer Perforation lediglich ein Werkstoffabtrag unter Berücksichtigung entsprechender vorgegebener Positionskoordinaten der Bearbeitungskontur durchgeführt werden.

Je nach Bearbeitungsart, wobei hier insbesondere die erforderliche Zeit für die jeweilige Bearbeitung eine Rolle spielt, der Vorschubgeschwindigkeit und/oder der Bearbeitungskontur von Bearbeitungssegmenten bzw. das gesamte Werkstück kann auf die maximal erforderliche Bearbeitungsgeschwindigkeit geschlossen werden, also wie schnell muß der Brennfleck bewegt bzw. der Laserstrahl ausgelenkt werden.

Wie bereits angesprochen kann die erfindungsgemäße Lösung nicht nur an translatorisch bewegten Werkstücken, wie Bändern eingesetzt werden, sondern die Werkstücke können auch um eine Drehachse rotieren. Dabei sollten Drehachse und Arbeitsfeld zumindest teilweise versetzt zueinander angeordnet sein, so dass eine vollständige Überdeckung des zu bearbeitenden Bereiches von Werkstücken durch das Arbeitsfeld erreichbar ist. Dementsprechend befindet sich die Drehachse dann immer innerhalb des Arbeitsfeldes. Es besteht dabei auch die Möglichkeit einer Überlagerung der Drehbewegung des Werkstückes mit einer translatorischen Auslenkung des Arbeitsfeldes, z. B. durch eine entsprechende translatorische Bewegung eines Laserbearbeitungskopfes. Dadurch kann eine Bearbeitung in Spiralform bevorzugt bei großen sich drehenden Werkstücken durchgeführt werden.

Die Grenzen der Bearbeitungssegmente können dann unter Berücksichtigung des maximalen Radius der Bearbeitungskontur definiert werden, da am jeweils größten Radius die größte Vorschubgeschwindigkeit zu berücksichtigen ist. Auf dem größten Radius der Bearbeitungskontur sollte dann die Vorgabe für den Abstand der Grenzen eines Bearbeitungssegmentes zueinander von maximal 50 % der Ausdehnung/Länge des Arbeitsfeldes erfüllt sein, so dass eine automatische Programmgenerierung möglich ist.

Es besteht auch die Möglichkeit mit dem Laserstrahl in allen bzw. auch in bekannten ausgewählten Bearbeitungssegmenten oder regelmäßigen Abständen zueinander Markierungen (Wegstempel) am Werkstück mit dem Laserstrahl auszubilden, die vorzugsweise in einem Verschnittbereich des Werkstückes angeordnet werden können. Mit geeigneten Detektoren, bevorzugt berührungslos messenden, können deren Positionskoordinaten detektiert und für die weitere Steuerung/Regelung genutzt werden. Eine solche Markierung (Wegstempel) die in jedem Bearbeitungssegment ausgebildet worden ist, kann auch ein Signal für die elektronische Auswerteund Steuereinheit generieren, die dann das Ende und den Beginn für eine Bearbeitung eines und des diesem in Vorschubrichtung nachfolgenden Bearbeitungssegmentes initiiert.

Mit der Erfindung ist eine Entkopplung der Bearbeitungsgeschwindigkeit von der Vorschubgeschwindigkeit möglich, sie kann demzufolge unabhängig von der jeweiligen Vorschubgeschwindigkeit konstant gehalten werden.

Es können unterschiedlichste auch komplexe Bearbeitungskonturen berücksichtigt und auch reproduzierbare Arbeitsergebnisse erreicht werden.

Die erreichbare Bearbeitungsgeschwindigkeit wird im wesentlichen nur durch die Zeitkonstanten mit Auslenkgeschwindigkeiten sowie der Größe des Arbeitsfeldes begrenzt. Bei der Bearbeitung ist ine Berücksichtigung eines Rasters nicht erforderlich und die Bewegung des Brennfleckes bzw. die Auslenkung des Laserstrahles kann in den einzelnen Bearbeitungssegmenten unter Berücksichtigung der vorgegebenen Bearbeitungskontur optimiert werden.

Nachfolgend soll die Erfindung beispielhaft näher erläutert werden.

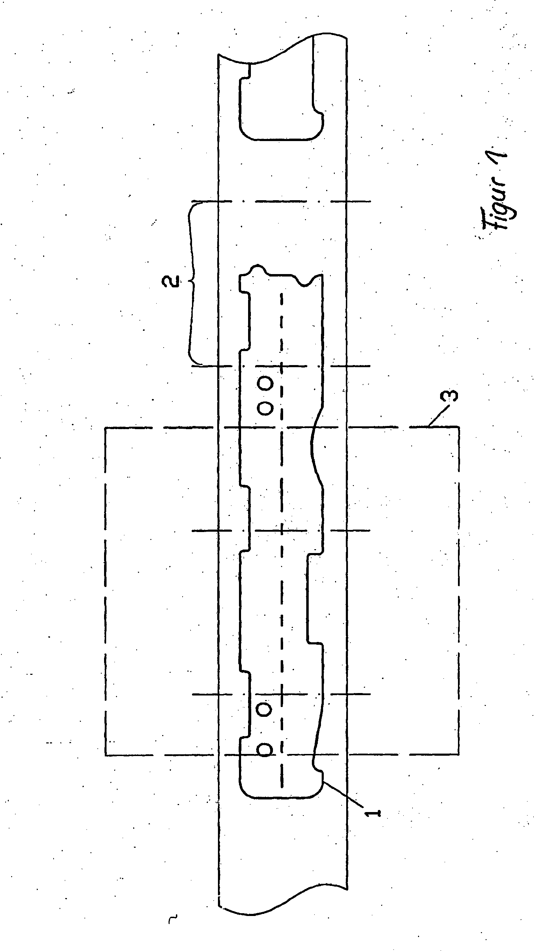

Dabei zeigt
- Figur 1: in schematischer Form die Bearbeitung einer bandförmigen Kunststofffolie, als Werkstück mit dem erfindungsgemäßen Verfahren beispielhaft.

Mit dem erfindungsgemäßen Verfahren sollte eine Bearbeitung an einer translatorisch bewegten Kunststofffolie, als Werkstück 1 mit einem Laserstrahl durchgeführt werden. Die Kunststofffolie kann dabei zwischen zwei hier nicht dargestellten Rollen gespannt und in eine Längsrichtung durch ab- und aufrollen transportiert und so ein Vorschub realisiert werden.

Die Kunststoffolie soll dabei in einer bestimmten Form mit einem Laserstrahl, der zweidimensional auslenkbar ist mit einer vorgegeben Randkontur (durchgezogene Linie) geschnitten werden. Außerdem soll parallel zur Vorschubrichtung hier eine Perforation (gestrichelte Linie) ausgebildet werden. Dies kann durch einen geringfügigen Werkstoffabtrag, ausgehend von der Oberfläche der Kunststofffolie erreicht werden.

Die Positionskoordinaten für äußere Randkontur und Perforation wurden vorab einer elektronischen Auswerte- und Steuereinheit zugeführt und bilden die Basis für die Bearbeitungskontur.

Mittels der elektronischen Auswerte- und Steuereinheit wurden solche Positionskoordinaten virtuellen Bearbeitungssegmenten 2 zugeordnet. In Figur 1 sind die Bearbeitungssegmente durch zeichnerische Darstellung ihrer Grenzen kenntlich gemacht. Die Grenzen sind auf der Kunststofffolie nicht real vorhanden.

Es ist außerdem das Arbeitsfeld 3 dargestellt, dass hier in Überdeckung mit zwei benachbarten Bearbeitungssegmenten 2 eingezeichnet worden ist. So wird deutlich, dass die Grenzen der Bearbeitungssegmente einen Abstand zueinander aufweisen, der bei diesem Beispiel genau der Hälfte der Länge des Arbeitsfeldes 3 in Vorschubrichtung entspricht.

Weiterhin ist erkennbar, dass die Bearbeitungskontur in den einzelnen Bearbeitungssegmenten 2 voneinander abweicht und nicht identisch ist und auch nicht sein muss.

## Patentansprüche

1. Verfahren zur Bearbeitung von in einer Vorschubrichtung bewegten Werkstücken mittels Laserstrahlung, bei dem ein Laserstrahl mittels Scannerspiegeln innerhalb eines Arbeitsfeldes in Bezug zu zwei orthogonal zueinander ausgerichteten Achsen ausgelenkt werden kann,
**dadurch gekennzeichnet, dass** Positionskoordinaten der jeweiligen Bearbeitungskontur, die großer als das Arbeitsfeld (3) ist, in einer elektronischen Auswerte- und Steuereinheit virtuellen in Vorschubrichtung nachfolgenden Bearbeitungssegmenten (2) zugeordnet werden, in denen die Bearbeitung sequentiell durchgeführt wird, und
dabei die Grenzen der einzelnen virtuellen Bearbeitungssegmente (2) so vorgegeben werden, dass innerhalb der zur Verfügung stehenden von der Vorschubgeschwindigkeit des Werkstücks beeinflussten Bearbeitungszeit eine vollständige Bearbeitung eines jeweiligen Bearbeitungssegments erfolgt und dabei der maximale Abstand von sich gegenüberliegend angeordneten Grenzen der jeweiligen Bearbeitungssegmente (2), 50% der maximalen Länge des Arbeitsfeldes (3) für den Laserstrahl in Vorschubrichtung des bewegten Werkstückes (1) nicht überschreitet

2. Verfahren nach Anspruch 1, **dadurch gekennzeichnet, dass** ein band- oder plattenförmiges Werkstück (1) bearbeitet wird.

3. Verfahren nach Anspruch 1 oder 2, **dadurch gekennzeichnet, dass** das Werkstück (1) translatorisch oder rotatoriach bewegt wird.

4. Verfahren nach einem der vorhergehenden Ansprüche, **dadurch gekennzeichnet, dass** die jeweilige Vorschubgeschwindigkeit und/oder der Vorschubweg des Werkstückes (1) bestimmt wird.

5. Verfahren nach einem der vorhergehenden Ansprüche, **dadurch gekennzeichnet, dass** unterschiedliche Bearbeitungen an einem Werkstück (1) durchgeführt werden.

6. Verfahren nach einem der vorhergehenden Ansprüche, **dadurch gekennzeichnet, dass** bei der Bearbeitung die Fokussierung des Laserstrahles und/oder die Leistung des Laserstrahles geregelt wird.

7. Verfahren nach einem der vorhergehenden Ansprüche, **dadurch gekennzeichnet, dass** die Grenzen von Bearbeitungssegmenten (2) an rotierenden Werkstücken (1) so vorgegeben werden, dass der maximale Abstand von Grenzen der Bearbeitungssegmente (2) auf dem jeweils größten Radius einer Bearbeitungskontur berücksichtigt wird.

## Claims

1. A method for machining workpieces which are moved in a feed direction by means of laser radiation, in which a laser beam can be deflected by means of scanner mirrors within a working field in relation to two axes oriented orthogonally to one another,
**characterised in that** positional coordinates of the respective machining contour, which is greater than the working field (3), are associated in an electronic evaluation and control unit with virtual machining segments (2) which follow in the feed direction, in which segments the machining is carried out sequentially, and
in so doing the limits of the individual virtual machining segments (2) are predetermined such that within the available machining time which is influenced by the rate of feed of the workpiece complete machining of a respective machining segment takes place and in so doing the maximum distance between limits of the respective machining segments (2) which are arranged lying opposite one another does not exceed 50% of the maximum length of the working field (3) for the laser beam in the feed direction of the workpiece (1) which is moved.

2. A method according to Claim 1, **characterised in that** a strip-shaped or plateshaped workpiece (1) is machined.

3. A method according to Claim 1 or 2, **characterised in that** the workpiece (1) is moved in translation or in rotation.

4. A method according to one of the preceding claims, **characterised in that** the respective rate of feed and/or the feed travel of the workpiece (1) is determined.

5. A method according to one of the preceding claims, **characterised in that** different machining operations are carried out on a workpiece (1).

6. A method according to one of the preceding claims, **characterised in that** during the machining the focusing of the laser beam and/or the power of the laser beam is/are regulated.

7. A method according to one of the preceding claims, **characterised in that** the limits of machining segments (2) on rotating workpieces (1) are predetermined such that the maximum distance between limits of the machining segments (2) on the greatest radius of a machining contour in each case is taken into consideration.

## Revendications

1. Procédé pour l'usinage par rayonnement laser de pièces déplacées dans une direction d'avance, dans lequel un rayon laser peut être dévié par rapport à deux axes orientés orthogonalement l'un à l'autre au moyen de miroirs de balayage à l'intérieur d'une zone de travail,
**caractérisé en ce que** les coordonnées de positionnement de chaque contour d'usinage qui est plus grand que la zone de travail (3) sont associées, dans une unité électronique d'analyse et de commande, à des segments d'usinage (2) virtuels, qui sont consécutifs dans la direction d'avance et dans lesquels l'usinage est effectué séquentiellement, et
à cette occasion, les limites des différents segments d'usinage (2) virtuels sont définis de telle sorte que pendant le temps d'usinage mis à disposition, influencé par la vitesse d'avance de la pièce est effectué un usinage complet d'un segment d'usinage respectif et, à cette occasion, la distance maximale entre des limites se faisant face des segments d'usinage (2) ne dépasse pas 50 % de la longueur maximale de la zone de travail (3) pour le rayon laser dans la direction d'avance de la pièce (1) en mouvement.

2. Procédé selon la revendication 1, **caractérisé en ce qu'**une pièce (1) en forme de bande ou de plaque est usinée.

3. Procédé selon la revendication 1 ou 2, **caractérisé en ce que** la pièce (1) est déplacée dans un mouvement de translation ou un mouvement de rotation.

4. Procédé selon l'une quelconque des revendications précédentes, **caractérisé en ce que** la vitesse d'avance respective et/ou le trajet d'avance de la pièce (1) sont déterminés.

5. Procédé selon l'une quelconque des revendications précédentes, **caractérisé en ce que** des usinages différents sont effectués sur une pièce (1).

6. Procédé selon l'une quelconque des revendications précédentes, **caractérisé en ce qu'**au moment de l'usinage on règle la focalisation du rayon laser et/ou la puissance du rayon laser.

7. Procédé selon l'une quelconque des revendications précédentes, **caractérisé en ce que** les limites des segments d'usinage (2) sur des pièces (1) mises en rotation sont définies de telle sorte que la distance maximale entre les limites des segments d'usinage (2) est considérée en fonction du plus grand rayon respectif d'un contour d'usinage.
